# DEMANDE DE BREVET EUROPEEN

(11) **EP 4 063 000 A1**
(43) Date de publication de la demande: **28.09.2022**
(21) Numéro de dépôt: 22163329.0
(22) Date de dépôt: 21.03.2022
(51) Int. Cl.: B01D 53/22

(54) **INSTALLATION POUR LE TRAITEMENT PAR PERMÉATION MEMBRANAIRE D'UN FLUX DE BIOGAZ AVEC UNE UNITÉ DE SÉPARATION MEMBRANAIRE À DEUX MODULES**

(30) Priorité: 22.03.2021 FR 2102827
(71) Demandeur: L'Air Liquide, société anonyme pour l'Étude et l'Exploitation des procédés Georges Claude, 75007 Paris (FR)
(72) Inventeur: BARRAUD, François, 38360 Sassenage (FR)
(74) Mandataire: Air Liquide

(57) **Abrégé**

Installation pour le traitement par perméation membranaire d'un flux de biogaz (1) comprenant au moins du méthane et du dioxyde de carbone :
- Un compresseur (2) permettant de comprimer le flux de biogaz (1),
- Une unité de séparation membranaire contenant 2 modules :
• Un premier module (3) apte à recevoir le flux de biogaz comprimé et à fournir un premier (5), un second (6) et un troisième (7) perméats et un premier rétentat (8),
• Un deuxième module (4) apte à recevoir le premier perméat (5) du premier module et à fournir un quatrième perméat (9) et un second rétentat (10),

- Au moins un moyen (11) de recyclage du second rétentat (10) et du troisième perméat (7) à l'entrée du compresseur (2), et
avec chaque module comprenant au moins une membrane plus perméable au dioxyde de carbone qu'au méthane.

## Description

La présente invention est relative à une installation de traitement par perméation membranaire d'un flux de biogaz comprenant au moins du méthane et du dioxyde de carbone pour produire un courant gazeux riche en méthane.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces.

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au coeur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL).

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Plusieurs étapes doivent être franchies entre la collecte du biogaz et l'obtention du biométhane, produit final apte à être comprimé ou liquéfié.

En particulier, plusieurs étapes sont nécessaires avant le traitement qui vise à séparer le dioxyde de carbone pour produire un courant de méthane purifié. Une première étape consiste à comprimer le biogaz qui a été produit et acheminé à pression atmosphérique, cette compression peut être obtenue - de façon classique - via un compresseur. Les étapes suivantes visent à débarrasser le biogaz des composants corrosifs que sont le sulfure d'hydrogène et les composés organiques volatils (COV), les technologies utilisées sont de façon classique l'adsorption à pression modulée (PSA) et le piégeage sur charbon actif. Vient ensuite l'étape qui consiste à séparer le dioxyde de carbone pour disposer in fine de méthane à la pureté requise pour son usage ultérieur.

Le dioxyde de carbone est un contaminant typiquement présent dans le gaz naturel dont il est courant de devoir le débarrasser. Des technologies variées sont utilisées pour cela en fonction des situations ; parmi celles-ci, la technologie membranaire est particulièrement performante lorsque la teneur en CO2 est élevée ; elle est donc utilisée pour séparer le CO2 présent dans le biogaz, provenant du gaz de digesteur ou dans le gaz de décharge.

Les procédés membranaires de séparation de gaz utilisés pour la purification d'un gaz, qu'ils utilisent un ou plusieurs étages de membranes doivent permettre la production d'un gaz à la qualité requise, pour un faible coût, tout en minimisant les pertes du gaz que l'on souhaite valoriser. Ainsi, dans le cas de l'épuration du biogaz, la séparation effectuée est principalement une séparation CH4/CO2, devant permettre la production d'un gaz contenant en fonction de son utilisation plus de 85% de CH4, de préférence plus de 95% de CO2, plus préférentiellement plus de 97,5% de CH4, tout en minimisant les pertes de CH4 dans le gaz résiduaire et le coût d'épuration, ce dernier étant pour une part importante lié à la consommation électrique du dispositif de compression du gaz en amont des membranes.

Il est préférable que les installations permettant la production d'un flux gazeux enrichi en méthane puissent contrôler la perte de méthane.

On connaît le système à trois étages de membranes améliore le rendement en méthane par rapport à un système à deux étages de membranes. Cependant, si le système à trois étages de membranes permet d'améliorer notablement le taux de récupération du gaz à valoriser (le CH4 dans le cas du biogaz) sans ajouter le coût d'un compresseur intermédiaire, il s'ensuit que sans compression intermédiaire du perméat, on n'obtient pas une bonne séparation dans le 3" étage de membrane, et ainsi, le rétentat du 3" étage de membrane contient une proportion encore importante de gaz à éliminer qui n'a pas perméé dans le 3' étage. Ce gaz à éliminer, inutilement recomprimé, augmente la consommation électrique du compresseur. Ainsi, dans le cas du biogaz, en l'absence de compression intermédiaire du perméat de la première membrane avant son passage dans le troisième étage de membrane, le rétentat du 3" étage de membrane recyclera une proportion de CO2 à l'entrée du compresseur. Il serait donc avantageux de réduire cette proportion de CO2 recyclé.

Il reste donc un besoin d'amélioration du procédé de séparation membranaire du méthane et du dioxyde de carbone contenu dans un biogaz permettant d'obtenir du méthane de grande pureté, avec un très bon rendement, tout en diminuant le coût opératoire du système.

Une solution de la présente invention est une installation pour le traitement par perméation membranaire d'un flux de biogaz 1 comprenant au moins du méthane et du dioxyde de carbone :
- Un compresseur 2 permettant de comprimer le flux de biogaz 1,
- Une unité de séparation membranaire contenant deux modules :
   - Un premier module 3 apte à recevoir le flux de biogaz comprimé et à fournir un premier 5, un second 6 et un troisième 7 perméats et un premier rétentat 8,
   - Un deuxième module 4 apte à recevoir le premier perméat 5 du premier module et à fournir un quatrième perméat 9 et un second rétentat 10,
- Au moins un moyen 11 de recyclage du second rétentat 10 et du troisième perméat 7 à l'entrée du compresseur 2, et avec chaque module comprenant au moins une membrane plus perméable au dioxyde de carbone qu'au méthane.

Notons que de préférence un seul moyen de recyclage permet le recyclage conjoint du second retentat 10, et du second 6 et du troisième 7 perméats.

De préférence le quatrième perméat 9 est rejeté à l'atmosphère ou est valorisé pour récupérer le CO₂.

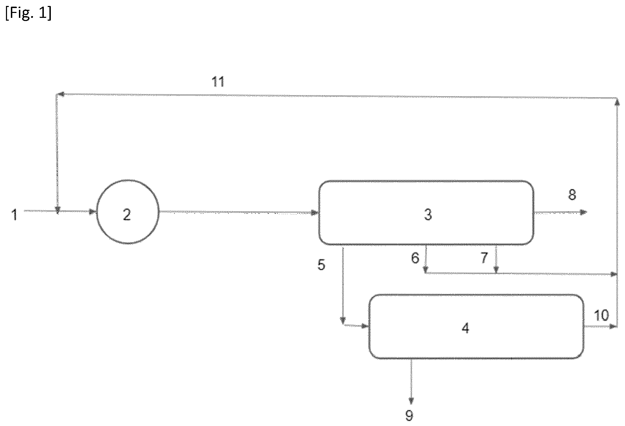

La figure 1 représente un exemple d'installation selon l'invention.

Selon le cas, l'installation selon l'invention peut présenter une ou plusieurs des caractéristiques ci-dessous :
- Le moyen 11 de recyclage permet un recyclage du second perméat 6 à l'entrée du compresseur 2,
- les membranes comprises dans chaque module ont la même sélectivité,
- au moins un module comprend une membrane de sélectivité différente,
- l'installation comprend en amont du compresseur 2 au moins un moyen de prépurifier le flux de biogaz ; notons que le ou les moyens de prépurifier le flux de biogaz sont choisis parmi des moyens de pré-purification du biogaz à traiter aptes à assurer selon les besoins tout ou partie des fonctions de séchage, abattement du élimination des composés organiques volatils (COV).
- l'installation comprend un moyen P de mesure de la pression du premier rétentat 8;
- l'installation comprend un moyen C de mesure de la concentration en méthane dans le premier rétentat 8; Notons que les moyens P et C permettent de contrôler que le biométhane produit (premier rétentat) présente les spécificités requises ; De préférence l'installation comprendra également un moyen de comparaison de la pression mesurée et/ou de la concentration mesurée avec des valeurs de pression et de concentration cibles et un moyen de renvoi du premier rétentat au méthaniseur produisant le flux de biogaz, si la ou les valeurs mesurées sont en dessous des valeurs cibles.
- l'installation comprend un moyen de fixer la pression du premier rétentat 8 en fonction de la concentration en méthane mesurée dans le premier rétentat 8.
- l'installation comprend un moyen de fixer la pression du second rétentat 10.

La présente invention a également pour objet un procédé de traitement par perméation membranaire d'un flux de biogaz 1 comprenant au moins du méthane et du dioxyde de carbone, mettant en oeuvre une installation selon l'invention, et comprenant :
a) Une étape de compression 2 du flux de biogaz 1,
b) Une étape d'alimentation du premier module 3 avec le flux de biogaz comprimé de sorte à produire un premier rétentat 8 enrichi en méthane par rapport au flux de biogaz à traiter et un premier 5, un second 6 et un troisième 7 perméats enrichis en dioxyde de carbone par rapport au flux de biogaz ; avec le premier perméat 5 plus riche en méthane que le second 6 et le troisième 7 perméats,
c) Une étape d'alimentation du deuxième module 4 avec le premier perméat 5 de sorte à produire un second rétentat 10 enrichi en méthane par rapport au premier perméat 5 et un quatrième perméat 9 enrichi en dioxyde de carbone par rapport au premier perméat, et
d) Une étape de recyclage 11 du second rétentat 10 et du troisième perméat 7 à l'entrée du compresseur 2.
Le second perméat sera soit recyclé soit envoyé au second module 4.

Selon le cas, le procédé selon l'invention peut présenter une ou plusieurs des caractéristiques ci-dessous :
- le procédé comprend en amont de l'étape de compression 2 au moins une étape de prépurification du flux de biogaz 1 ; Notons que la ou les étapes de prépurification sont de préférence choisi parmi le séchage, l'abattement du CO₂ ou l'élimination des composés organiques volatils (COV),
- le procédé comprend une étape de mesure de la pression du premier rétentat 8; de préférence le procédé comprendra une étape de comparaison de la pression mesurée avec une valeur de pression cible et une étape de renvoi du premier rétentat au méthaniseur produisant le flux de biogaz si la pression mesurée est inférieure à la valeur de pression cible ;
- le procédé comprend une étape de mesure de la concentration en méthane dans le premier rétentat 8 ; de préférence le procédé comprendra une étape de comparaison de la concentration mesurée avec une valeur de concentration cible et une étape de renvoi du premier rétentat au méthaniseur produisant le flux de biogaz si la concentration mesurée est inférieure à la valeur de concentration cible ;
- Le procédé comprend une étape de fixation de la pression du premier rétentat 8 en fonction de la concentration en méthane mesurée dans le premier rétentat 8,
- Le procédé comprend une étape de fixation de la pression du second rétentat 10. Cette étape sera réalisée de manière à maintenir le taux de méthane à l'évent le plus faible possible.
Les étapes de mesure, de comparaison et de fixation sont réalisées automatiquement par des moyens de transmission de données et de traitement de données.

Notons que selon la quantité de biogaz à traiter, l'installation selon l'invention pourra comprendre en parallèle plusieurs unités de séparation membranaire à deux modules telles que définies précédemment. Le flux de biogaz sera alors divisé entre ces différentes unités de séparation membranaire.

La solution proposée par la présente invention permet de simplifier le procédé de traitement par perméation membranaire d'un flux de biogaz tout en réduisant son cout de fabrication et ceci en gardant les mêmes performances qu'un système à trois étages de membranes.

## Revendications

1. Installation pour le traitement par perméation membranaire d'un flux de biogaz (1) comprenant au moins du méthane et du dioxyde de carbone :
- Un compresseur (2) permettant de comprimer le flux de biogaz (1),
- Une unité de séparation membranaire contenant deux modules :
• Un premier module (3) apte à recevoir le flux de biogaz comprimé et à fournir un premier (5), un second (6) et un troisième (7) perméats et un premier rétentat (8),
• Un deuxième module (4) apte à recevoir le premier perméat (5) du premier module et à fournir un quatrième perméat (9) et un second rétentat (10),
- Au moins un moyen (11) de recyclage du second rétentat (10) et du troisième perméat (7) à l'entrée du compresseur (2), et
avec chaque module comprenant au moins une membrane plus perméable au dioxyde de carbone qu'au méthane.

2. Installation selon la revendication 1, **caractérisée en ce que** le moyen de recyclage (11) permet un recyclage du second perméat (6) à l'entrée du compresseur.

3. Installation selon l'une des revendications 1 ou 2, **caractérisée en ce que** les membranes comprises dans chaque module ont la même sélectivité.

4. Installation selon l'une des revendications 1 ou 2, **caractérisée en ce qu'**au moins un module comprend une membrane de sélectivité différente.

5. Installation selon l'une des revendications 1 à 4, **caractérisée en ce qu'**elle comprend en amont du compresseur (2) au moins un moyen de prépurifier le flux de biogaz (1).

6. Installation selon l'une des revendications 1 à 5, **caractérisée en ce qu'**elle comprend un moyen P de mesure de la pression du premier rétentat (8).

7. Installation selon l'une des revendications 1 à 6, **caractérisée en ce qu'**elle comprend un moyen C de mesure de la concentration en méthane dans le premier retentat (8).

8. Installation selon la revendication 7, **caractérisée en ce qu'**elle comprend un moyen de fixer la pression du premier rétentat (8) en fonction de la concentration en méthane mesurée dans le premier rétentat (8).

9. Installation selon l'une des revendications 1 à 8, **caractérisée en ce qu'**elle comprend un moyen de fixer la pression du second rétentat (10).

10. Procédé de traitement par perméation membranaire d'un flux de biogaz (1) comprenant au moins du méthane et du dioxyde de carbone, mettant en oeuvre une installation selon l'une des revendications 1 à 9, et comprenant :
a) Une étape de compression (2) du flux de biogaz (1),
b) Une étape d'alimentation du premier module (3) avec le flux de biogaz (1) comprimé de sorte à produire un premier rétentat (8) enrichi en méthane par rapport au flux de biogaz à traiter et un premier (5), un second (6) et un troisième (7) perméats enrichis en dioxyde de carbone par rapport au flux de biogaz ; avec le premier perméat (5) plus riche en méthane que le second (6) et le troisième (7) perméat,
c) Une étape d'alimentation du deuxième module (4) avec le premier perméat (5) de sorte à produire un second rétentat (10) enrichi en méthane par rapport au premier perméat et un quatrième perméat (9) enrichi en dioxyde de carbone par rapport au premier perméat, et
d) Une étape de recyclage (11) du second rétentat et du troisième perméat à l'entrée du compresseur.

11. Procédé selon la revendication 10, **caractérisé en ce que** le procédé comprend en amont de l'étape de compression au moins une étape de prépurification du flux de biogaz.

12. Procédé selon l'une des revendications 10 ou 11, **caractérisé en ce qu'**il comprend une étape de mesure de la pression du premier rétentat (8).

13. Procédé selon l'une des revendications 10 à 12, **caractérisé en ce qu'**il comprend une étape de mesure de la concentration en méthane dans le premier rétentat (8).

14. Procédé selon l'une des revendications 10 à 13, **caractérisé en ce qu'**il comprend une étape de fixation de la pression du premier rétentat (8) en fonction de la concentration en méthane mesurée dans le premier rétentat (8).

15. Procédé selon l'une des revendications 10 à 14, **caractérisé en ce qu'**il comprend une étape de fixation de la pression du second rétentat (10).
